# EUROPEAN PATENT SPECIFICATION

(11) **EP 0 420 286 B1**
(45) Date of publication and mention of the grant of the patent: **09.11.1994**
(21) Application number: 90118744.3
(22) Date of filing: 28.09.1990
(51) Int. Cl.: H02K 5/10

(54) **An actuator cap apparatus**
Apparat zum Abdecken einer Betätigungsvorrichtung
Appareil pour couvrir un actionneur

(30) Priority: 29.09.1989 JP 115405/89 U
(43) Date of publication of application: 03.04.1991
(73) Proprietor: AISIN SEIKI KABUSHIKI KAISHA, Kariya City Aichi Pref. (JP)
(72) Inventor: Amano, Hiroyuki, Kariya-city, Aichi-pref. (JP); Hirao, Kouji, Ciryu city, Aichi-pref. (JP); Iwasaki, Shinichiro, Anjo-city, Aichi-pref. (JP); Matsukawa, Kazuhiro, Nisio-city, Aichi-pref. (JP); Takagi, Hiroyuki, Toyota-city, Aichi-pref. (JP)
(74) Representative: Tiedtke, Harro, Dipl.-Ing.

(56) References cited:
- DE-C- 877 026
- PATENT ABSTRACTS OF JAPAN, vol. 10, no. 347 (E-457)(2403), 21 November 1986; & JP-A-61 147746 (MATSUSHITA) 5 July 1986

## Description

### BACKGROUND OF THE INVENTION

### 1. Field of the invention

The present invention relates, generally, to an actuator cap apparatus and, more particularly, to an actuator cap apparatus which is equipped to a motor or an electromagnetic valve.

### 2. Description of the related art

An actuator cap apparatus is often equipped to an electric motor actuator for water-proofing thereof which is used, for example, in a cruise control system for controlling a throttle valve opening value.

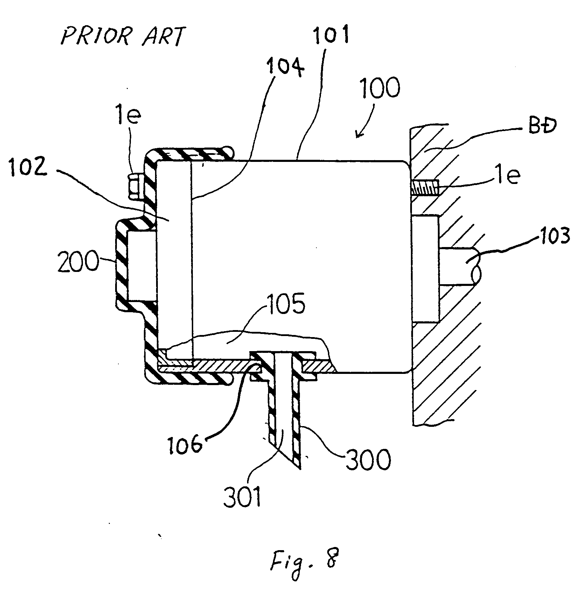

A conventional type actuator cap apparatus, for example is disclosed in Fig. 8.

Referring now to Fig. 8, an actuator 100 basically includes a motor case 101 and a motor cap 102. An output shaft 103 projecting from the actuator 100 is well known, and the actuator 100 is fixed to a vehicle body BD via bolts le (only one is shown). The output shaft 103 is operatively connected with a drive unit (not shown) which is accommodated in the motor case 101. A seamed portion 104 is formed between the motor case 101 and the motor cap 102. A cover 200 is fitted on the actuator 100 at the motor cap 102 side of the actuator 100. The motor case 101 and the motor cap 102 define a space 105 therebetween, and the drive unit is arranged in the space 105. A communication hole 106 is formed on the side surface of the motor case 101 for establishing air communication between the space 105 and the actuator 100 through a communication pipe 300. A communication pipe 300 with a communication conduit 301 is fitted in the communication hole 106.

In the following the operation of the conventional actuator 100 is explained . When an operating condition and a non-operating condition of the actuator 100 is repeated, compression of air in the space 105 occurs. After the actuator 100 is operated, a vacuum pressure is accumulated in the space 105 which is due to the rotation of the drive unit.

There are problems in the above-described design or arrangement. When water drops on the actuator 100, water intrudes into the drive unit of the actuator 100 due to the sucking function of negative pressure. The drive unit is damaged, thereby braking the actuator.

### Summary of the invention

Accordingly, it is the primary object of the present invention to provide an actuator apparatus with a breathing function.

It is another object of the present invention to provide a water proof actuator cap apparatus.

It is still another object of this invention to provide a new-fashioned and an advanced type actuator cap apparatus.

It is a further object of this invention to produce an actuator cap apparatus to solve the above described drawbacks of the conventional actuator cap apparatus.

Other objects, advantages and novel features of the present invention will become apparent from the following detailed description of the invention when considered in connection with the accompanying drawings.

To achieve the above objects, and in accordance with the principles of the invention as embodied and broadly described herein, an actuator cap apparatus is provided for assuring fluid tightness and the air communication between an actuator having a cylindrical main body and an atmosphere, said actuator cap apparatus comprising; a cup-shaped cap fluid-tightly mounted on an opening of said actuator main body, establishing a seamed portion therebetween, a cup-shaped cover fitted over the cap and part of the main body, and a communication pipe for air communication between the actuator and the atmosphere, characterised by said cap having a communication hole, said communication pipe being formed integrally with and extending in a downward direction from said cup-shaped cover and positioned away from said communication hole, and an intermediate passage formed in said cup-shaped cap for assuring air communication between said communication hole and said communication pipe.

### BRIEF DESCRIPTION OF THE DRAWINGS

Fig. 1 shows a partial cross-sectional view of an actuator cap apparatus mounted on an actuator of the present invention
Fig. 2 represents a cross-sectional view of an actuator cap apparatus taken along line I-I in Fig. 1
Fig. 3 represents an enlarged sectional view of an air conduit.
Fig. 4 represents a side view of an actuator cap apparatus cover
Fig. 5 represents a plan view of an actuator cap apparatus cover
Fig. 6 represents a cross-sectional view of the actuator cap apparatus cover taken along line II-II in Fig. 4
Fig. 7 represents a cross-sectional view of the actuator cap apparatus cover taken along line III-III in Fig. 5
Fig. 8 represents a conventional type actuator cap apparatus.

### DETAILED DESCRIPTION OF THE PREFERRED EMBODIMENT

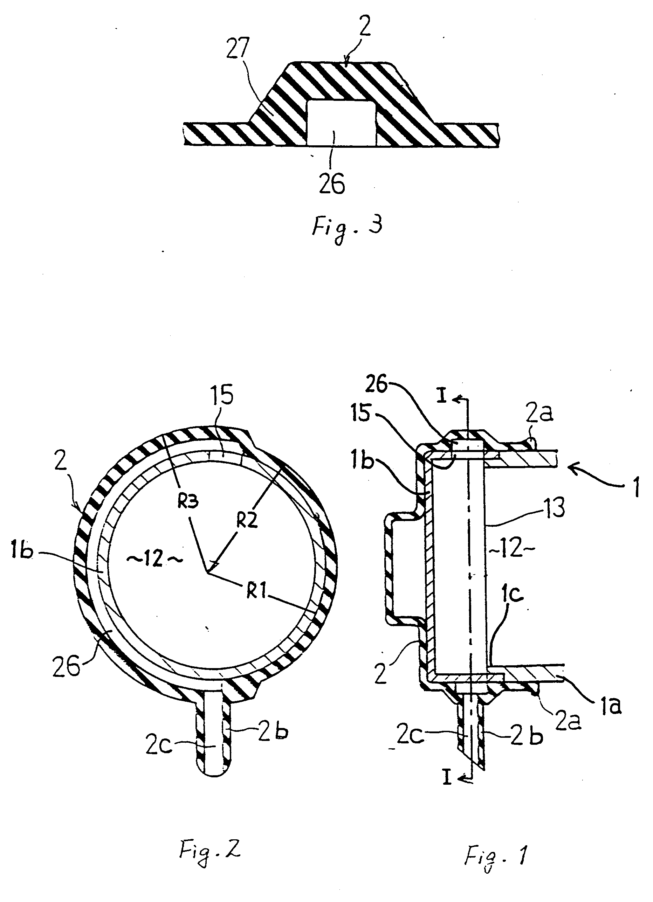

In the preferred embodiment, an actuator cap apparatus is used in an actuator 1. Fig. 1 shows a partial cross-sectional view of the actuator 1 and the actuator cap apparatus. The actuator 1 has a main body 1a (first housing), a cap 1b (second housing) and a drive unit (not shown). The drive unit is enclosed in the main body 1a and generates a drive power when a current is supplied. The main body 1a is cylindrically shaped and has an opening 1c.The cap 1b is formed as a cup-shaped configuration and is fitted on the opening 1c. A seamed portion 13 is established between the main body 1a and the cap 1b. The side wall of the cap 1b has a communication hole 15 for establishing a communication between an inner portion and an outer portion of the actuator 1. The drive unit is accommondated within a space 12 which is defined by the main body 1a and the cap 1b. A cover 2 is fitted on the main body 1a and the cap 1b. The cover 2 has an annular lip 2a and a communication pipe 2b, with a communication conduit 2c. An air passage 26 is formed in the inner side wall of the cover 2.

Fig. 2 represents a cross-sectional view taken along line I-I in Fig. 1. The radius R1 of the cap 1b is smaller than the radius R2 of the cover 2. The cover 2 has different radii, the radius R3 of the air passage portion 26 is larger than the radius R2. A concave portion of the cover 2 is designed to be the air passage 26.The communication pipe 2b extends in the downward direction.The communication hole 15 of the cap 1b and the communication pipe 2b do not meet each other. The position of the communication hole 15 determines an edge portion of the air passage 26.

Fig. 3 represents an enlarged sectional view of the air passage 26. The cover 2 has a thickened portion 27 for preventing the deformation of the air passage 26.

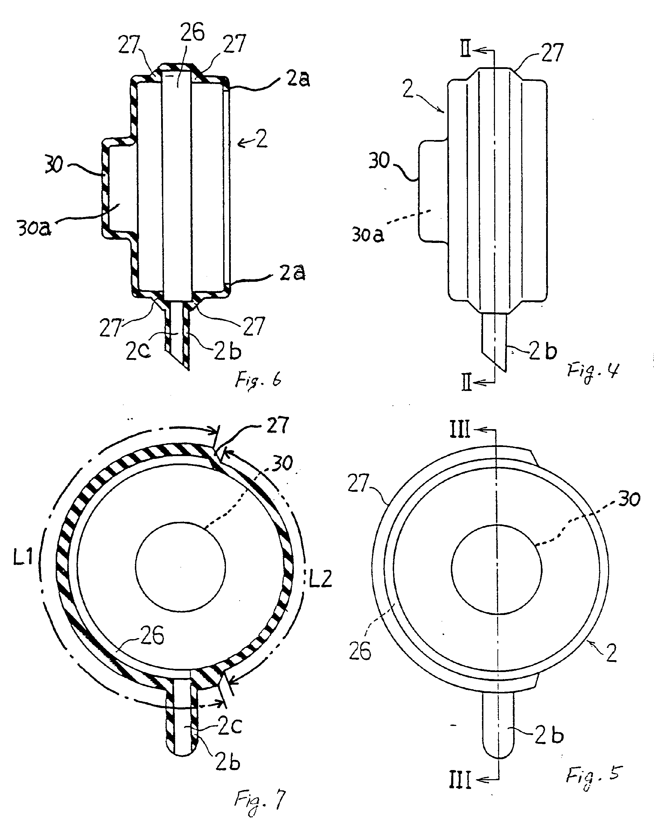

Fig. 4 represents a side view of the actuator cap apparatus cover 2.

Fig. 5 represents a plan view of the actuator cap apparatus cover 2.

Fig. 6 represents a cross-sectional view taken along line II-II in Fig. 4

Fig. 7 represents a cross-sectional view taken along line III-III in Fig. 5.

The cover 2 has a raised portion 30. The raised portion 30 forms an accommodating space 30a, and a part of the cap 1b is enclosed. The lip 2a formed at the opening portion of the cover 2 serves to assure the fluid tightness between the cap 1b and the actuator 1. A circumferential length of L1 is longer than that of L2. The air passage 26 corresponds to the L1 portion. The L2 portion is the wall portion which is fitted on the cap 1b directly.

The principal operation of this embodiment is similar to that of the conventional actuator cap apparatus as previously defined.

When the vacuum pressure is developed in the space 12, the moisture is sucked into the space 12 by the resulting negative pressure. However, the air passage 26 of the present invention prohibits an inundation by the moisture. The length of L1 is effective for the interception of the moisture. An additional effect is obtained by the combined use of the cover 2 and the location of the communication hole 15.

The invention has been described in an illustrative manner, and it is to be understood that the terminology which has been used is intended to be in the nature of words of description rather than of limitation.

Obviously, many modifications and variations of the present invention are possible in light of the above teachings.It is, therefore, to be understood that within the scope of the appended claims, the invention may be practiced otherwise than specifically described.

## Claims

1. An actuator cap apparatus for assuring fluid tightness and the air communication between an actuator (1) having a cylindrical main body (1a) and an atmosphere, said actuator cap apparatus comprising;
a cup-shaped cap (1b) fluid-tightly mounted on an opening (1c) of said actuator main body (1a), establishing a seamed portion (13) therebetween,
a cup-shaped cover (2) fitted over the cap (1b) and part of the main body (1a), and
a communication pipe (2b) for air communication between the actuator and the atmosphere,
CHARACTERISED BY
said cap (1b) having a communication hole (15),
said communication pipe (2b) being formed integrally with and extending in a downward direction from said cup-shaped cover (2) and positioned away from said communication hole (15), and
an intermediate passage (26) formed in said cup-shaped cap (2) for assuring air communication between said communication hole (15) and said communication pipe (2b).

2. An actuator cap apparatus according to claim 1 in which said intermediate passage (26) is formed on an inner surface of said cup-shaped cover (2) between said cup-shaped cover (2) and said cup-shaped cap (1b).

3. An actuator cap apparatus according to claim 2 in which said intermediate passage (26) is concave shaped.

4. An actuator cap apparatus according to anyone one of claims 1 to 3 in which the opening portion of said cup shaped cover (2) has a lip (2a).

5. An actuator cap apparatus according to claim 1 in which the length (L1) of said intermediate passage (26) around the circumference of the cup-shaped cover (2) is longer than the length of the remaining portion of the circumference (L2) where the cover (2) fits directly to the cap (1b).

## Patentansprüche

1. Apparat zum Abdecken einer Betätigungsvorrichtung, um Fluiddichtheit und die Fluidverbindung zwischen einer Betätigungsvorrichtung (1), welche einen zylindrischen Hauptkörper (1a) aufweist, und der Umgebung zu gewährleisten, wobei der Apparat zum Abdecken einer Betätigungsvorrichtung folgendes aufweist:
eine tassenartige Kappe (1b), welche fluiddicht an eine Öffnung (1c) des Hauptkörpers (1a) der Betätigungsvorrichtung angebracht ist, so daß dazwischen ein Randabschnitt (13) hergestellt ist,
eine tassenartige Abdeckung (2), welche über die Kappe (1b) und einen Teil des Hauptkörpers (1a) aufgepaßt ist, und
eine Verbindungsleitung (2b) für die Fluidverbindung zwischen der Betätigungsvorrichtung und der Umgebung;
GEKENNZEICHNET DURCH
die Kappe (1b), welche ein Verbindungsloch (15) aufweist,
die Verbindungsleitung (2b), welche mit der tassenartigen Abdeckung (2) einstückig ausgebildet und sich ausgehend von der tassenartigen Abdeckung (2) nach unten erstreckt sowie von dem Verbindungsloch (15) weg positioniert ist, und
einen Zwischendurchlaß (26), welcher in der tassenartigen Kappe (2) für die Gewährleistung der Fluidverbindung zwischen dem Verbindungsloch (15) und der Verbindungsleitung (2b) ausgebildet ist.

2. Apparat zum Abdecken einer Betätigungsvorrichtung nach Anspruch 1, bei welchem der Zwischendurchlaß (26) an einer zwischen der tassenartigen Abdeckung (2) und der tassenartigen Kappe (1b) befindlichen Innenfläche der tassenartigen Abdeckung (2) ausgebildet ist.

3. Apparat zum Abdecken einer Betätigungsvorrichtung nach Anspruch 2, bei welchem der Zwischendurchlaß (26) konkav ausgebildet ist.

4. Apparat zum Abdecken einer Betätigungsvorrichtung nach einem der Ansprüche 1 bis 3, bei welchem der Öffnungsabschnitt der tassenartigen Abdeckung (2) eine Lippe (2a) hat.

5. Apparat zum Abdecken einer Betätigungsvorrichtung nach Anspruch 1, bei welchem die um den Umfang der tassenartigen Abdeckung (2) befindliche Länge (L1) des Zwischendurchlasses (26) größer als die Länge (L2) des übrigen Umfangsabschnitts ist, bei dem die Abdeckung (2) unmittelbar an der Kappe (1b) anliegt.

## Revendications

1. Dispositif pour coiffer un actionneur afin d'assurer l'étanchéité aux fluides et la communication fluidique entre un actionneur (1) ayant un corps principal cylindrique (1a) et l'atmosphère, ledit dispositif pour coiffer un actionneur comprenant :
une coiffe en forme de coupe (1b) montée de manière étanche aux fluides sur une ouverture (1c) dudit corps principal (1a) de l'actionneur, établissant entre eux une partie formant couture (13),
un couvercle en forme de coupe (2), monté sur la coiffe (1b) et une partie du corps principal (1a), et
une conduite de communication (2b) pour une communication fluidique entre l'actionneur et l'atmosphère,
caractérisé en ce que :
ladite coiffe (1b) comporte un trou de communication (15),
ladite conduite de communication (2b) est formée en une pièce avec ledit couvercle en forme de coupe (2) et s'étend dans la direction du bas à partir de celui-ci, et est située en s'éloignant dudit trou de communication (15), et
un passage intermédiaire (26) est formé dans ladite coiffe en forme de coupe (2) pour assurer la communication fluidique entre ledit trou de communication (15) et ladite conduite de communication (2b).

2. Dispositif pour coiffer un actionneur selon la revendication 1, dans lequel ledit passage intermédiaire (26) est formé sur la surface intérieure dudit couvercle en forme de coupe (2) entre ce couvercle en forme de coupe (2) et ladite coiffe en forme de coupe (1b).

3. Dispositif pour coiffer un actionneur selon la revendication 2, dans lequel ledit passage intermédiaire (26) est de forme concave.

4. Dispositif pour coiffer un actionneur selon l'une quelconque des revendications 1 à 3, dans lequel la partie ouverture dudit couvercle en forme de coupe (2) comporte une lèvre (2a).

5. Dispositif pour coiffer un actionneur selon la revendication 1, dans lequel la longueur (L1) dudit passage intermédiaire (26) sur la circonférence du couvercle en forme de coupe (2) est plus grande que la longueur du reste de la circonférence (L2) là où le couvercle (2) se monte directement sur la coiffe (1b).
